# EUROPÄISCHE PATENTSCHRIFT

(11) **EP 3 455 028 B1**
(45) Veröffentlichungstag und Bekanntmachung des Hinweises auf die Patenterteilung: **18.03.2020**
(21) Anmeldenummer: 17723323.6
(22) Anmeldetag: 08.05.2017
(51) Int. Cl.: B23K 31/10, B23K 26/03, B23K 26/38, B23K 15/08

(54) **VERFAHREN UND VORRICHTUNG ZUR ÜBERWACHUNG, INSBESONDERE ZUR REGELUNG, EINES SCHNEIDPROZESSES**
METHOD AND APPARATUS FOR MONITORING, IN PARTICULAR CONTROLLING, A CUTTING PROCESS
PROCÉDÉ ET DISPOSITIF DE SURVEILLANCE, EN PARTICULIER DE RÉGLAGE, D'UN PROCESSUS DE COUPE

(30) Priorität: 13.05.2016 DE 102016208264
(43) Veröffentlichungstag der Anmeldung: 20.03.2019
(73) Patentinhaber: Trumpf Werkzeugmaschinen GmbH + Co. KG, 71254 Ditzingen (DE)
(72) Erfinder: BOCKSROCKER, Oliver, 70197 Stuttgart (DE); EPPLE, Stefanie, 73734 Esslingen (DE); HESSE, Tim, 71254 Ditzingen (DE)
(74) Vertreter: Kohler Schmid Möbus Patentanwälte
(86) Internationale Anmeldenummer: PCT/EP2017/060904
(87) Internationale Veröffentlichungsnummer: WO 2017/194460

(56) Entgegenhaltungen:
- WO-A1-2012/143899
- DE-A1- 3 739 862
- DE-A1-102011 003 717
- JP-A- 2002 079 386
- US-A1- 2010 326 962

## Beschreibung

Die vorliegende Erfindung betrifft ein Verfahren zur Überwachung, insbesondere zur Regelung, eines Schneidprozesses, bei dem ein Werkstück mittels eines Hochenergiestrahls, insbesondere mittels eines Laserstrahls, geschnitten wird. Die Erfindung betrifft auch eine zugehörige Vorrichtung zur Überwachung, insbesondere zur Regelung, eines Schneidprozesses an einem Werkstück (siehe beispielsweise WO 2012/143899 A1).

Beim Schmelzschneiden mit Hilfe eines Hochenergiestrahls, beispielsweise mit Hilfe eines Plasmastrahls oder eines Laserstrahls, wird typischer Weise ein chemisch inertes Schneidgas, beispielsweise Stickstoff oder Argon, verwendet, das nicht mit dem aufgeschmolzenen metallischen Werkstoffmaterial im Schnittspalt des Werkstücks reagiert. Das Schneidgas dient beim Schmelzschneiden dazu, geschmolzenes Werkstückmaterial nach unten aus dem Schnittspalt auszutreiben sowie die Schnittkanten vor der umgebenden Luft abzuschirmen. Alternativ zur Verwendung von Stickstoff oder Argon kann beim so genannten Druckluftschneiden (komprimierte) Luft als Schneidgas verwendet werden. Da Luft zu mehr als 80% aus Stickstoff besteht, handelt es sich beim Druckluftschneiden ebenfalls um einen Schmelzschneidprozess. Beim Schmelzschneiden steht nur die Energie des Laserstrahls für das Schneiden bzw. das Aufschmelzen des typischer Weise metallischen Werkstücks zur Verfügung. Beim Brennschneiden mit Hilfe eines Hochenergiestrahls wird hingegen ein reaktives Schneidgas, z.B. Sauerstoff, verwendet, das mit dem metallischen Werkstoffmaterial eine chemische Reaktion eingeht und dieses verbrennt.

Beim Schneiden eines metallischen Werkstücks beispielsweise mittels eines Festkörperlasers kann es zu Schneidfehlern bis hin zu einem Schnittabriss kommen. Typische Schneidfehler sind beispielsweise eine erhöhte Gratbildung, eine erhöhte Kantenrauigkeit und Kantenschräge der Schnittkanten, ein inhomogenes Riefenbild sowie Schlacke-Anhaftungen.

Aus der US 2013/0178952 A1 sind ein Verfahren zur Regelung eines Laserbearbeitungsprozesses sowie ein Laserbearbeitungskopf bekannt geworden, bei dem das Verfahren zur Regelung angewendet wird. Bei dem Verfahren wird ein optisches Spektrum des Prozesslichts bzw. von Prozessemissionen beim Laserschweißen oder beim Laserschneiden analysiert, wobei Veränderungen in der Verteilung und der Intensität des Prozesslichts mit Veränderungen des Bearbeitungsprozesses zusammenhängen. Für die Analyse des Prozesslichts wird vorgeschlagen, in einem Laserbearbeitungskopf drei Fotodioden vorzusehen, um Prozessemissionen bei unterschiedlichen Wellenlängen aufzunehmen. Die drei wellenlängengefilterten Fotodioden sind ausgelegt, Prozessemissionen in drei unterschiedlichen Wellenlängenbereichen zu erfassen: Ein erster Wellenlängenbereich von 1030 nm bis 1080 nm dient zur Erfassung eines Laserrückreflexes, ein zweiter Wellenlängenbereich zwischen 1150 nm und 1800 nm dient zur Erfassung der Temperatur und ein dritter Wellenlängenbereich zwischen 350 nm und 625 nm dient zur Erfassung von Metalldampf oder zur Erfassung von Plasmastrahlung.

Aus der DE 43 36 136 A1 ist eine Laserbearbeitungsvorrichtung bekannt geworden, bei der eine Separation von Sekundärlicht bzw. von Prozesslicht vom Laserstrahl in einem Resonator erfolgt, um das Sekundärlicht und den Laserstrahl auf separaten Detektoren außerhalb des Resonators zu erfassen. Die Beobachtung bzw. die Erfassung kann koaxial zum Laserstrahl durch eine Bearbeitungsdüse und einen Laserresonator hindurch erfolgen. Als Detektor zur Erfassung des Prozesslichts kann beispielsweise eine Kamera dienen, welche die Intensität des Sekundärlichts oder die Wellenlängenverteilung des Sekundärlichts detektiert.

In der WO 2012/143899 A1 sind ein Verfahren und eine Vorrichtung zur Steuerung eines Laserschneidprozesses beschrieben, bei dem als Referenzsignal eine oder mehrere Emissionslinien eines emittierenden Elements verwendet werden, welches sich in einem von einem Laserstrahl bestrahlten Volumen befindet. Auf Grundlage des Referenzsignals wird mindestens ein Kontrollparameter angepasst, der aus einer Mehrzahl von Prozesskontrollparametern ausgewählt wird. Bei dem emittierenden Element kann es sich um ein Prozessgas oder um ein metallisches Element handeln, welches in dem Material des Werkstücks enthalten ist, das von dem Laserstrahl bestrahlt wird. Bei dem metallischen Element kann es sich beispielsweise um Eisen, um Aluminium oder um eine Aluminiumlegierung, um Nickel, Chrom oder um Kupfer handeln. Die Strahlung des metallischen Elements wird typischer Weise in einem Wellenlängenbereich mit einer Breite von ± 50 nm überwacht, der mindestens eine Emissionslinie des metallischen Elements enthält.

In dem Artikel "Optical Cutting Tear Detection System for Industrial Fiber Laser based Cutting Machines" von B. Adelmann et al., Hochschule Aschaffenburg, 2015, ist ein Verfahren zum Erkennen eines Schnittabrisses beschrieben, bei dem die Prozessstrahlung von einer gestapelten Silizium- und InGaAs-Fotodiodenkombination detektiert wird. Das detektierte Signal wird hochpassgefiltert und der Fluktuationsbereich des gefilterten Signals wird berechnet. In dem resultierenden Signal wird ein Schnittabriss erkannt, wenn der Fluktuationsbereich der Si-Photodiode den mit einem Korrekturfaktor multiplizierten Fluktuationsbereich der InGaAs-Photodiode überschreitet.

### Aufgabe der Erfindung

Der Erfindung liegt die Aufgabe zugrunde, ein Verfahren und eine Vorrichtung bereitzustellen, welche eine Überwachung eines Schneidprozesses zur frühzeitigen Erkennung von Schneidfehlern und ggf. eine den Schneidfehlern entgegen wirkende Steuerung oder Regelung des Schneidprozesses ermöglichen.

### Gegenstand der Erfindung

Diese Aufgabe wird erfindungsgemäß durch ein Verfahren gemäß Anspruch 1 gelöst.

Bei der Bestrahlung des Werkstücks mit dem Hochenergiestrahl wird in dem Wechselwirkungsbereich, an dem der Hochenergiestrahl auf das Werkstück trifft, ein in der Regel geringer Anteil des metallischen Werkstoffs verdampft. Kommt es zu einer lokalen Verdampfung des Grundwerkstoffs des Werkstücks, werden die verdampften Atome der metallischen Bestandteile wie z.B. Eisen oder Chrom durch eine fortlaufende Bestrahlung mittels des Hochenergiestrahls angeregt, wodurch die Atome bei mindestens einer Emissionslinie bzw. Spektrallinie in dem ersten Wellenlängenbereich emittieren. Die Emissionslinie(n) überlagern in dem ersten Wellenlängenbereich die Kontinuumsstrahlung, die typischer Weise aus Temperaturstrahlung (Wärmestrahlung) der thermischen Emissionen des Werkstücks, genauer gesagt des Grundwerkstoffs des Werkstücks, sowie ggf. zu einem geringen Teil aus weiteren Anteilen wie rückreflektierter Laserstrahlung besteht, die ebenfalls von dem Werkstück ausgeht. Der zweite Wellenlängenbereich ist so gewählt, dass keine Emissionslinien der metallischen Bestandteile des Werkstücks in diesem Wellenlängenbereich liegen, so dass die in dem zweiten Wellenlängenbereich detektierte Intensität des Prozesslichtsignals praktisch ausschließlich auf Kontinuumsstrahlung, d.h. auf Strahlung mit einem kontinuierlichen Spektrum ohne Spitzen bei diskreten Wellenlängen, insbesondere auf Temperaturstrahlung bzw. auf Wärmestrahlung zurückzuführen ist, die den Emissionen eines schwarzen Strahlers, genauer gesagt eines grauen Strahlers ähnlich ist. Daher kann bei einer einsetzenden lokalen Verdampfung von metallischen Bestandteilen des Werkstücks in dem ersten Wellenlängenbereich ein Anstieg der Intensität des Prozesslichtsignals detektiert werden, wohingegen die detektierte Intensität des Prozesslichtsignals in dem zweiten Wellenlängenbereich keine bzw. nur eine geringe Veränderung im Signalverlauf aufweist, so dass diese als Referenzwert dienen kann. Insbesondere kann ein relativer Vergleich der beiden in dem ersten Wellenlängenbereich und in dem zweiten Wellenlängenbereich detektierten Intensitäten vorgenommen werden, beispielsweise indem ein Quotient aus den beiden Intensitäten gebildet wird.

Anhand der beiden Intensitäten kann eine einsetzende Verdampfung des Werkstücks, genauer gesagt von dessen Grundwerkstoff, typischer Weise eindeutig identifiziert bzw. erkannt werden. Es hat sich gezeigt, dass die einsetzende Verdampfung des Werkstücks mit bestimmten Schneidfehlern in Zusammenhang steht, beispielsweise mit einer erhöhten Kantenrauigkeit der Schnittkanten des Schneidspalts sowie mit einem inhomogenen Riefenbild. Durch die spektral selektive Detektion des Prozesslichtsignals in dem ersten Wellenlängenbereich sowie durch den Vergleich mit dem Prozesslichtsignal in einem spektral nicht zu weit beabstandeten zweiten Wellenlängenbereich ist es möglich, beim Schmelzschneiden eindeutig auf einen prozessstörenden Verdampfungszustand zu schließen. Auch beim Brennschneiden kann eine einsetzende Verdampfung des Werkstückmaterials auf einen Schneidfehler hindeuten, da auch beim Brennschneiden bei einem Qualitätsschnitt typischer Weise keine bzw. nur eine geringfügige Verdampfung auftritt. Bei einsetzender Verdampfung kann der Oxidationsprozess unterdrückt werden, so dass die Energie des Oxidationsprozesses nicht mehr in der Wechselwirkungszone zur Verfügung steht, vgl. den Artikel "Laser oxygen cutting of mild steel: the thermodynamics of the oxidation reaction", J. Powell et al., J. Phys. D: Appl. Phys. 42 (2009) 015504.

Die einsetzende Verdampfung ist typischer Weise durch einen signifikanten Anstieg bzw. Sprung der Intensität des in dem ersten Wellenlängenbereich detektierten Prozesslichtsignals (bezogen auf die als Referenz dienende zweite Intensität) gekennzeichnet. Durch das Erkennen des Einsetzens der Verdampfung in dem Wechselwirkungsbereich wird eine Fehler- bzw. Qualitätskontrolle des Schmelzschneidprozesses ermöglicht, bei dem eine Abweichung von einem Qualitätsschnitt detektiert werden kann.

Bei einer Variante umfasst das Verfahren: Anpassen mindestens eines Kontrollparameters des Schneidprozesses in Abhängigkeit von dem in dem ersten Wellenlängenbereich und in dem zweiten Wellenlängenbereich detektierten Prozesslichtsignal. Zusätzlich zur Fehlerkontrolle kann erforderlichenfalls ein frühzeitiges Eingreifen in den Schneidprozess erfolgen, um einen oder mehrere Kontrollparameter des Schneidprozesses geeignet anzupassen, insbesondere um diesen zu steuern oder derart zu regeln, dass die Abweichung von einem Qualitätsschnitt minimiert wird. Die Anpassung kann beispielsweise erfolgen, wenn die Intensität des in dem ersten Wellenlängenbereich detektierten Prozesslichtsignals (bezogen auf den Referenzwert) oberhalb eines Intensitätsschwellwerts liegt, oder wenn der Gradient bzw. die Steigung der Intensität des in dem ersten Wellenlängenbereich detektierten Prozesslichtsignals (bezogen auf den Referenzwert) einen Schwellwert überschreitet, wie dies beispielsweise bei einem plötzlich auftretenden Anstieg der Intensität der Fall ist, die auf das Einsetzen einer Verdampfung des Werkstoffs des Werkstücks hindeutet. Auf diese Weise kann eine Regelung an der Qualitätsgrenze des Schneidprozesses knapp unterhalb des Übergangs zu einem Schneidprozess mit verminderter Schnittqualität (so genannter Schlechtschnitt) erfolgen.

Bei einer vorteilhaften Variante wird der mindestens eine Kontrollparameter derart angepasst, dass dem Verdampfen des mindestens einen metallischen Bestandteils entgegen gewirkt wird. Wie weiter oben beschrieben wurde, können auf diese Weise Schneidfehler vermieden bzw. reduziert werden. Beispielsweise kann dem Verdampfen des mindestens einen metallischen Bestandteils dadurch entgegen gewirkt werden, dass die Vorschubgeschwindigkeit, d.h. die Relativgeschwindigkeit zwischen dem typischer Weise senkrecht zum in der Regel plattenförmigen Werkstück ausgerichteten Hochenergiestrahl und dem Werkstück, beim Schneidprozess reduziert wird. Es versteht sich, dass auch andere Kontrollparameter des Schneidprozesses geeignet angepasst werden können, beispielsweise kann die Leistung des Hochenergie- bzw. Laserstrahls erhöht werden, um der Verdampfung entgegen zu wirken. Durch die Erhöhung der Laserleistung wird wie bei der Reduzierung des Vorschubs die Streckenenergie erhöht, die in das Werkstück eingebracht wird. Die Erhöhung der Streckenenergie führt zu einem steileren Schneidfrontwinkel und damit zu einer geringeren lokal absorbierten Intensität der Laserstrahlung, die der Verdampfung entgegen wirkt.

Bei einer weiteren Variante wird der mindestens eine Kontrollparameter ausgewählt aus der Gruppe umfassend: Vorschubgeschwindigkeit, Leistung des Hochenergiestrahls, Fokusposition des Hochenergiestrahls in Richtung der Strahlachse, Fokusdurchmesser, Abstand zwischen Werkstückoberseite und einer Schneidgas-Düse eines (Laser-)Schneidkopfs, und Schneidgasdruck. Wie weiter oben beschrieben wurde, können auch andere Kontrollparameter des Schneidprozesses angepasst werden, um dem Auftreten von Schneidfehlern entgegen zu wirken, beispielsweise kann eine Fokusposition in Richtung der Strahlachse angepasst werden, z.B. um den Strahldurchmesser auf dem Werkstück zu verändern, insbesondere zu vergrößern, so dass die Intensität des Hochenergiestrahls in dem Wechselwirkungsbereich reduziert wird. Auch kann unabhängig von der Veränderung der Fokuslage eine Veränderung des Fokusdurchmessers des Hochenergiestrahls vorgenommen werden, wozu beispielsweise eine Strahlformungseinrichtung zur Formung des Strahlprofils des Hochenergiestrahls verwendet werden kann. Eine ähnliche Wirkung wie bei der Veränderung der Fokuslage kann ggf. durch eine Anpassung des Abstands zwischen der Werkstückoberseite und einer Schneidgas-Düse erzielt werden, die typischer Weise Teil eines Bearbeitungskopfs, genauer gesagt eines Schneidkopfs zur Bearbeitung des Werkstücks ist. Durch die Veränderung des Abstands kann auch die Strömung eines Schneidgases, bei dem es sich bei dem hier beschriebenen Schneidprozess typischer Weise um ein inertes Gas oder um Luft, ggf. um ein reaktives Gas, z.B. um Sauerstoff, handelt, geeignet angepasst werden. Auch kann der Schneidgasdruck, d.h. der Druck, mit dem das Schneidgas aus der Bearbeitungsdüse austritt, und der beim Schmelzschneiden typischer Weise zwischen ca. 2 bar und ca. 20 bar liegt, geeignet angepasst werden.

Bei einer vorteilhaften Variante liegen der erste Wellenlängenbereich und der zweite Wellenlängenbereich jeweils im sichtbaren Wellenlängenbereich zwischen 400 nm und 800 nm. Der zweite Wellenlängenbereich weist hierbei typischer Weise größere Wellenlängen auf als der erste Wellenlängenbereich. Für den Vergleich der Intensitäten des in den beiden Wellenlängenbereichen detektierten Prozesslichtsignals hat es sich als vorteilhaft erwiesen, wenn die beiden Wellenlängenbereiche keinen zu großen Abstand voneinander aufweisen. Da die Laserwellenlänge typischer Weise im nahen Infrarotbereich liegt, ist es günstig, wenn beide Wellenlängenbereiche innerhalb des sichtbaren Wellenlängenbereichs liegen, da auf diese Weise unerwünschte Störungen durch Rückreflexe des Laserstrahls vermieden werden können. Der spektrale Abstand zwischen dem ersten Wellenlängenbereich und dem zweiten Wellenlängenbereich sollte nicht zu klein sein und in der Regel mindestens ca. 10 nm betragen.

Bei einer weiteren Variante liegt der erste Wellenlängenbereich zwischen 500 nm und 550 nm, bevorzugt zwischen 515 nm und 545 nm. In diesem Wellenlängenbereich liegen Emissionslinien von Eisen und Chrom, die in der Regel metallische Bestandteile des Werkstücks bilden. Auch Aluminium weist in dem ersten Wellenlängenbereich zwischen 500 nm und 550 nm mindestens eine Emissionslinie auf. Für die Detektion des Prozesslichtsignals in dem ersten Wellenlängenbereich kann beispielsweise ein Wellenlängenfilter, z.B. ein Bandpass-Filter, dienen, welcher den ersten Wellenlängenbereich aus dem Wellenlängenspektrum des Prozesslichtsignals selektiert und welcher eine Bandbreite von maximal ca. 50 nm, bevorzugt von maximal ca. 30 nm, beispielsweise von ± 25 nm oder von ± 15 nm, um eine zentrale Wellenlänge von z.B. 525 nm, aufweist. Gegebenenfalls kann auch ein erster Wellenlängenbereich ausgewählt werden, der (geringfügig) von dem oben genannten Wertebereich abweicht und in dem eine oder mehrere Emissionslinien eines anderen metallischen Bestandteils des Werkstücks liegen.
Bei einer weiteren Weiterbildung liegt der zweite Wellenlängenbereich bei Wellenlängen von mehr als 560 nm, bevorzugt von mehr als 600 nm. Der zweite Wellenlängenbereich kann ebenfalls mit Hilfe eines Wellenlängenfilters aus dem Spektrum des Prozesslichtsignals selektiert werden, der eine spektrale Bandbreite von z.B. maximal 50 nm oder maximal 30 nm aufweist. Der zweite Wellenlängenbereich ist von den Emissionslinien von metallischen Bestandteilen des Werkstücks ausreichend weit beabstandet, so dass das in dem zweiten Wellenlängenbereich detektierte Prozesslichtsignal im Wesentlichen auf Temperatur- bzw. Wärmestrahlung zurückzuführen ist und daher nur unwesentlich von der einsetzenden Verdampfung der metallischen Bestandteile des Werkstücks beeinflusst wird. Der zweite Wellenlängenbereich kann beispielsweise in einem Intervall zwischen 560 nm und 610 nm liegen, aber auch in einem anderen Intervall zwischen 560 nm und 800 nm, beispielsweise zwischen z.B. 750 nm und 800 nm. Bei einer weiteren Variante weist der Laserstrahl eine Laserwellenlänge im IR-Wellenlängenbereich zwischen 800 nm und 1200 nm auf. Die Laserwellenlänge des Laserstrahls sollte typischer Weise ausreichend weit von dem zweiten Wellenlängenbereich beabstandet sein, damit ggf. an dem Werkstück reflektierte Laserstrahlung die Intensität des in dem zweiten Wellenlängenbereich detektierten Prozesslichtsignals nicht oder nur geringfügig beeinflusst. Insbesondere kann der Laserstrahl von einem Festkörperlaser, beispielsweise einem Scheibenlaser, einem Diodenlaser oder einem Faserlaser, erzeugt werden. Zur Trennung des Prozesslichtsignals von dem Laserstrahl kann eine Strahlteilereinrichtung beispielsweise in Form eines dichroitischen Spiegels dienen, welche in den Strahlengang des Laserstrahls eingebracht ist und welche das Prozesslichtsignal aus dem Strahlengang des Laserstrahls auskoppelt.

Ein weiterer Aspekt der Erfindung betrifft eine Vorrichtung gemäß Anspruch 9, umfassend: eine Fokussiereinrichtung zur Fokussierung eines Hochenergiestrahls, insbesondere eines Laserstrahls, auf das Werkstück, eine Detektionseinrichtung zur Detektion eines Prozesslichtsignals aus einem Wechselwirkungsbereich des Hochenergiestrahls mit dem Werkstück in einem ersten Wellenlängenbereich, in dem mindestens ein metallischer Bestandteil des Werkstücks mindestens eine Emissionslinie aufweist, sowie in einem zweiten, vom ersten verschiedenen Wellenlängenbereich, in dem Kontinuumsstrahlung, insbesondere Temperaturstrahlung, des Werkstücks ohne Emissionslinien detektierbar ist, sowie eine Überwachungseinrichtung, die zum Überwachen des Schneidprozesses, insbesondere zum Überwachen einer Verdampfung des mindestens einen metallischen Bestandteils, anhand einer Intensität des in dem ersten Wellenlängenbereich detektierten Prozesslichtsignals und anhand einer Intensität des in dem zweiten Wellenlängenbereich detektierten Prozesslichtsignals ausgebildet bzw. programmiert ist.
Der erste und der zweite Wellenlängenbereich können insbesondere im sichtbaren Wellenlängenbereich zwischen 400 nm und 800 nm liegen. Die Vorrichtung kann beispielsweise einen Laserschneidkopf umfassen, in dem die Fokussiereinrichtung, beispielsweise in Form einer Fokussierlinse, angeordnet ist. Zur Auskopplung des Prozesslichtsignals, welches von dem Wechselwirkungsbereich zwischen dem Hochenergiestrahl und dem Werkstück ausgeht, kann eine wellenlängenselektive Strahlteilereinrichtung dienen. Die Stahlteilereinrichtung kann beispielsweise im kollimierten Strahlengang des Hochenergiestrahls zwischen der Fokussiereinrichtung und einer Kollimationseinrichtung angeordnet sein und das Prozesslichtsignal aus dem Strahlengang des Hochenergiestrahls zu der Detektionseinrichtung auskoppeln. Die Strahlteilereinrichtung kann entweder transmissiv oder reflektiv für die Wellenlänge des Laserstrahls ausgebildet sein, die beispielsweise zwischen 800 nm und 1200 nm, z.B. bei ca. 1 µm, liegen kann und diese kann entweder reflektiv oder transmissiv für den ersten und zweiten oder ggf. für einen breiteren Wellenlängenbereich ausgebildet sein, beispielsweise für einen Wellenlängenbereich zwischen 500 nm und 800 nm.
Die Detektionseinrichtung weist typischer Weise eine weitere Strahlteilereinrichtung auf, welche das Prozesslichtsignal in einen ersten Strahlungsanteil und in einen zweiten Strahlungsanteil aufteilt. Die weitere Strahlteilereinrichtung kann beispielsweise als Lochspiegel oder als Polarisationsstrahlteiler ausgebildet sein. Es ist aber auch möglich, dass die weitere Strahlteilereinrichtung als Wellenlängenfilter dient und eine Selektion des ersten Wellenlängenbereichs und des zweiten Wellenlängenbereichs aus dem Prozesslichtsignal bewirkt und beispielsweise reflektiv für einen ersten Strahlungsanteil in dem ersten Wellenlängenbereich und transmissiv für einen zweiten Strahlungsanteil in dem zweiten Wellenlängenbereich ist, oder umgekehrt. Die als Wellenlängenfilter ausgebildete Strahlteilereinrichtung kann beispielsweise als dichroitischer Spiegel ausgebildet sein.

Die Überwachungseinrichtung überwacht den Schneidprozess anhand der in dem ersten und zweiten Wellenlängenbereich detektierten Intensitäten des Prozesslichtsignals und ermöglicht es auf diese Weise, Schneidfehler und insbesondere den Übergang von einem Qualitätsschnitt zu einem Schnitt mit schlechter Schnittqualität frühzeitig zu erkennen.

Bei einer Ausführungsform umfasst die Vorrichtung eine Steuerungseinrichtung, die ausgebildet ist, anhand des in dem ersten Wellenlängenbereich und in dem zweiten Wellenlängenbereich detektierten Prozesslichtsignals mindestens einen Kontrollparameter des Schneidprozesses anzupassen. Wird von der Überwachungseinrichtung das drohende Auftreten eines Schneidfehlers erkannt, beispielsweise anhand einer einsetzenden Verdampfung von metallischen Bestandteilen des Werkstücks, wird von der Steuereinrichtung auf den Schneidprozess eingewirkt, indem mindestens ein Kontrollparameter des Schneidprozesses angepasst wird. Bei den Kontrollparametern kann es sich insbesondere um die weiter oben im Zusammenhang mit dem Verfahren beschriebenen Kontrollparameter handeln.

Bei einer vorteilhaften Weiterbildung ist die Steuerungseinrichtung ausgebildet, den mindestens einen Kontrollparameter derart anzupassen, dass dem Verdampfen des mindestens einen metallischen Bestandteils entgegen gewirkt wird. Zu diesem Zweck kann die Steuerungseinrichtung beispielsweise auf einen oder mehrere Stellantriebe einwirken, welche zur Erzeugung einer Relativbewegung zwischen dem Laserstrahl und dem Werkstück dienen, um in dem Werkstück eine Schnittspalt auszubilden, der entlang einer (ortsabhängig veränderlichen) Vorschubrichtung verläuft. Die Steuerungseinrichtung kann durch die Einwirkung auf den bzw. die Antriebe die Geschwindigkeit der Relativbewegung und somit die Vorschubgeschwindigkeit reduzieren. Es versteht sich, dass alternativ oder zusätzlich die Steuerungseinrichtung auch auf andere Stelleinrichtungen zur Anpassung weiterer Kontrollparameter einwirken kann, um der lokalen Verdampfung des Werkstückmaterials entgegen zu wirken, beispielsweise auf eine Laserquelle zur Erzeugung des Laserstrahls, um die Laserleistung zu erhöhen oder ggf. um bei gepulst betriebener Laserquelle das Tastverhältnis so zu verändern, dass die Pulspausen zwischen aufeinanderfolgenden Laserpulsen verkürzt werden. Die Steuerungseinrichtung kann auch auf den Schneidkopf einwirken, um die Fokusposition des Hochenergiestrahls in Richtung der Strahlachse bzw. den Abstand zwischen Werkstückoberseite und einer Schneidgas-Düse des Schneidkopfs einzustellen. Die Steuerungseinrichtung kann z.B. auch auf ein steuerbares Ventil einwirken, um den Schneidgasdruck einzustellen.

Bei einer weiteren Ausführungsform ist die Detektionseinrichtung zur Selektion des ersten Wellenlängenbereichs des Prozesslichtsignals bei Wellenlängen zwischen 500 nm und 550 nm, bevorzugt zwischen 515 nm und 545 nm, und zur Selektion des zweiten Wellenlängenbereichs des Prozesslichtsignals bei Wellenlängen von mehr als 560 nm, bevorzugt von mehr als 600 nm ausgebildet. Wie weiter oben beschrieben wurde, kann zur Selektion des ersten bzw. des zweiten Wellenlängenbereichs beispielsweise eine Strahlteilereinrichtung in Form eines dichroitischen Spiegels dienen. Der zweite Wellenlängenbereich kann insbesondere eine Bandbreite von maximal 50 nm, bevorzugt eine kleinere Bandbreite, z.B. von maximal 30 nm, aufweisen und innerhalb des Wellenlängenbereichs zwischen 560 nm und 800 nm liegen, beispielsweise in einem Intervall zwischen 560 nm und 610 nm oder in einem Intervall zwischen 750 nm und 800 nm.

Bei einer weiteren Ausführungsform weist die Detektionseinrichtung einen ersten Wellenlängenfilter zur Selektion des ersten Wellenlängenbereichs des Prozesslichtsignals sowie einen zweiten Wellenlängenfilter zur Selektion des zweiten Wellenlängenbereichs des Prozesslichtsignals auf. An Stelle einer wellenlängenselektiven Strahlteilereinrichtung, wie sie weiter oben beschrieben ist, kann in diesem Fall eine herkömmliche, nicht wellenlängenselektive Strahlteilereinrichtung in der Detektoreinrichtung verwendet werden, beispielsweise ein herkömmlicher Lochspiegel oder ein Polarisationsstrahlteiler. Die Wellenlängenfilter bzw. die Farbfilter können als Bandpassfilter beispielsweise eine Bandbreite von maximal 50 nm aufweisen. Es sind auch größere Bandbreiten als 50 nm möglich, in der Regel sind kleinere Bandbreiten jedoch günstiger.

Bei einer weiteren Ausführungsform weist die Detektionseinrichtung einen ersten Sensor zur Detektion des ersten Wellenlängenbereichs des Prozesslichtsignals sowie einen zweiten Sensor zur Detektion des zweiten Wellenlängenbereichs des Prozesslichtsignals auf. Bei dem ersten und zweiten Sensor handelt es sich um optische Sensoren, beispielsweise um Fotodioden oder um Kamerachips, die für den jeweiligen Wellenlängenbereich sensitiv sind. Der jeweilige Strahlungsanteil, der von dem ersten bzw. dem zweiten Sensor detektiert werden soll, kann mit Hilfe jeweils einer Fokussiereinrichtung, beispielsweise mit Hilfe einer Fokussierlinse, auf den jeweiligen Sensor fokussiert werden. Insbesondere bei der Verwendung von Sensoren in Form von Fotodioden kann aber auch auf eine Fokussierung verzichtet werden.

Bei einer alternativen Ausführungsform weist die Detektionseinrichtung einen ortsauflösenden Detektor, insbesondere eine Kamera, mit einer Detektorfläche zur gemeinsamen Detektion des ersten Wellenlängenbereichs und des zweiten Wellenlängenbereichs des Prozesslichtsignals auf. In diesem Fall kann das Prozesslichtsignal an einer nicht wellenlängenselektiven Strahlteilereinrichtung oder ggf. an einer wellenlängenselektiven Strahlteilereinrichtung in einen ersten Strahlungsanteil und einen zweiten Strahlungsanteil aufgeteilt werden. Im ersten Fall durchläuft der erste Strahlungsanteil einen ersten Wellenlängenfilter zur Selektion des ersten Wellenlängenbereichs und der zweite Strahlungsanteil durchläuft einen zweiten Wellenlängenfilter zur Selektion des zweiten Wellenlängenbereichs. Die beiden Strahlungsanteile werden nach der Filterung beispielsweise unter Verwendung eines dichroitischen Spiegels zusammengeführt und in der Regel mittels einer gemeinsamen Fokussiereinrichtung, beispielsweise in Form einer Fokussierlinse, auf die Detektorfläche der Kamera abgebildet. Typischer Weise unterscheidet sich die Strahlrichtung des ersten und des zweiten Strahlungsanteils bei der Fokussierung auf die Detektorfläche, so dass der erste Strahlungsanteil und der zweite Strahlungsanteil zueinander versetzt auf der Detektorfläche abgebildet und separat detektiert werden können. Die Verwendung eines ortsauflösenden Detektors, beispielsweise einer Kamera, hat den Vorteil, dass dieser zusätzlich für eine Prozessbeobachtung bzw. für die Beobachtung des Wechselwirkungsbereichs zwischen dem Hochenergiestrahl und dem Werkstück genutzt werden kann. Hierbei wirkt sich günstig aus, dass die Kamera typischer Weise für den sichtbaren Wellenlängenbereich sensitiv ist, der für eine Prozessbeobachtung besonders geeignet ist.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a: eine schematische Darstellung eines ersten Ausführungsbeispiels einer Vorrichtung zur Überwachung, insbesondere zur Regelung, eines Schneidprozesses, welche zwei optische Sensoren zur Detektion eines ersten und eines zweiten Wellenlängenbereichs eines Prozesslichtsignals aufweist,
- Fig. 1b: eine Darstellung analog zu Fig. 1a, bei der an Stelle der beiden Sensoren zur Detektion der beiden Wellenlängenbereiche eine Kamera verwendet wird,
- Fig. 2a,b: schematische Darstellungen der Intensität eines Prozesslichtsignals in Abhängigkeit von der Wellenlänge bei einem Qualitätsschnitt und bei einem Schlechtschnitt, sowie
- Fig. 3: schematische Darstellungen eines zeitlichen Verlaufs des gleitenden Mittelwerts bzw. der gleitenden Standardabweichung eines relativen Intensitätssignals bei einer Steigerung der Vorschubgeschwindigkeit des Schneidprozesses.

In der folgenden Beschreibung der Zeichnungen werden für gleiche bzw. funktionsgleiche Bauteile identische Bezugszeichen verwendet.

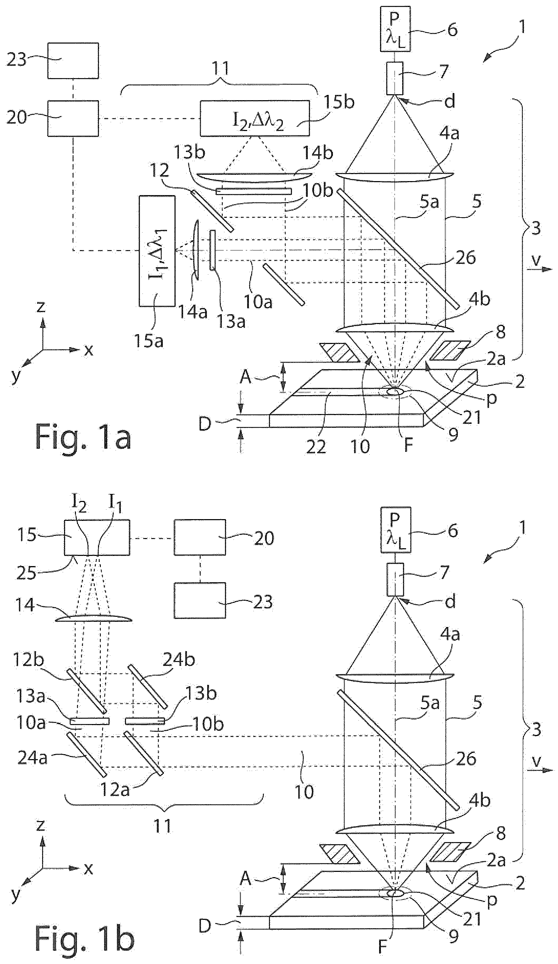

Fig. 1a zeigt einen beispielhaften Aufbau einer Vorrichtung 1 zur Prozessüberwachung und -regelung eines Laser-Schneidprozesses an einem im gezeigten Beispiel plattenförmigen, metallischen Werkstück 2 in Form einer Laserbearbeitungsanlage, von der in Fig. 1 ein Laserschneidkopf 3 mit einer Kollimationslinse 4a und mit einer Fokussierlinse 4b (ohne Gehäuse) dargestellt ist. In den Laserschneidkopf 3 wird ein Laserstrahl 5, der von einem Festkörperlaser 6 mit einer Laserwellenlänge λ_{L} von z.B. ca. 1 µm erzeugt wird, über eine Lichtleitfaser 7 eingekoppelt. Der Laserschneidkopf 3 weist eine Schneidgas-Düse 8 auf, durch die der Laserstrahl 5 mittels der Fokussierlinse 4b auf das Werkstück 2, genauer gesagt auf eine Werkstückoberseite 2a oder in die Nähe der Werkstückoberseite 2a, fokussiert wird. Es versteht sich, dass die Vorrichtung 1 anders als in Fig. 1a gezeigt ist auch zur Bearbeitung von dreidimensionalen Werkstücken, beispielsweise von Karosserie-Bauteilen, oder zur Bearbeitung von rohrförmigen Werkstücken ausgebildet sein kann.

Der fokussierte Laserstrahl 5 trifft in einem Wechselwirkungsbereich 9 auf das Werkstück 2, in dessen Zentrum typischer Weise der Laserstrahlfokus F des fokussierten Laserstrahls 5 positioniert ist. In dem Wechselwirkungsbereich 9 wird ein Prozesslichtsignal 10 erzeugt, welches von dem Wechselwirkungsbereich 9 ausgeht und die Fokussierlinse 4b in umgekehrter Richtung durchläuft, so dass die Fokussierlinse 4b für das Prozesslichtsignal 10 als Kollimationslinse wirkt. Im kollimierten Strahlengang zwischen der Kollimationslinse 4a und der Fokussierlinse 4b ist in dem Laserschneidkopf 3 eine Strahlteilereinrichtung in Form eines dichroitischen Spiegels 26 angeordnet, der transmissiv für die Laserwellenlänge λ_{L} nahe 1 µm, beispielsweise zwischen 900 nm und 1100 nm, und reflektiv für einen Wellenlängenbereich zwischen ca. 500 nm und ca. 800 nm ist, so dass das Prozesslichtsignal 10 in letzterem Wellenlängenbereich aus dem Laserschneidkopf 3 ausgekoppelt und in eine Detektoreinrichtung 11 eingekoppelt wird.

Die Detektoreinrichtung 11 weist eine (weitere) Strahlteilereinrichtung in Form eines Lochspiegels 12 auf, durch dessen zentrische Öffnung ein erster Strahlungsanteil 10a des Prozesslichtsignals 10 tritt, während ein zweiter Strahlungsanteil 10b des Prozesslichtsignals 10 an dem Lochspiegel 12 reflektiert wird. Der erste Strahlungsanteil 10a durchläuft einen ersten Wellenlängenfilter 13a in Form eines Bandpass-Filters, der einen ersten Wellenlängenbereich Δλ₁ des Prozesslichtsignals 10 zwischen 515 nm und 545 nm transmittiert und eine zentrale Wellenlänge von 530 nm aufweist (Bandbreite ± 15 nm). Der erste Strahlungsanteil 10a wird nach dem Durchlaufen des ersten Wellenlängenfilters 13a mittels einer ersten Fokussierlinse 14a auf einen ersten optischen Sensor 15a fokussiert. Entsprechend durchläuft der zweite, an dem Lochspiegel 12 reflektierte Strahlungsanteil 10b einen zweiten Wellenlängenfilter 13b in Form eines Bandpass-Filters, der einen zweiten Wellenlängenbereich Δλ₂ des Prozesslichtsignals 10 zwischen 750 nm und 800 nm transmittiert und der eine zentrale Wellenlänge von 775 nm aufweist (Bandbreite ± 25 nm). Der zweite Strahlungsanteil 10b wird nach dem Durchlaufen des zweiten Wellenlängenfilters 13b mittels einer zweiten Fokussierlinse 14b auf einen zweiten optischen Sensor 15b fokussiert.

Der erste und der zweite optische Sensor 15a, 15b sind im gezeigten Beispiel als Fotodioden ausgebildet, welche für den ersten bzw. für den zweiten Wellenlängenbereich Δλ₁, Δλ₂ sensitiv sind und welche (nicht ortsaufgelöst) eine Intensität I₁, I₂ des Prozesslichtsignals 10 in dem ersten bzw. zweiten Wellenlängenbereich Δλ₁, Δλ₂ detektieren. Alternativ können die beiden optischen Sensoren 15a, 15b auch als Kamerachips oder dergleichen ausgebildet sein. Auch kann an Stelle des Lochspiegels 12 eine wellenlängensensitive Strahlteilereinrichtung, beispielsweise ein dichroitischer Spiegel, verwendet werden, welcher den ersten Strahlungsanteil 10a in dem ersten Wellenlängenbereich Δλ₁ transmittiert und den zweiten Strahlungsanteil 10b in dem zweiten Wellenlängenbereich Δλ₂ reflektiert, oder umgekehrt.

**Fig. 1b** zeigt eine Vorrichtung 1 zur Überwachung bzw. zur Regelung eines Schneidprozesses, die sich von der in Fig. 1a gezeigten Vorrichtung 1 unter anderem durch die Ausgestaltung der Detektionseinrichtung 11 unterscheidet, die an Stelle der beiden Sensoren 15a, 15b einen ortsauflösenden Detektor 15 in Form einer Kamera, genauer gesagt einer CMOS-Kamera, aufweist. Die in Fig. 1b gezeigte Detektionseinrichtung 11 weist einen Strahlteiler 12a in Form eines Polarisationsstrahlteilers auf, an dem das Prozesslichtsignal 10 in einen ersten Strahlungsanteil 10a und einen zweiten Strahlungsanteil 10b mit jeweils der Hälfte der Strahlungsleistung des Prozesslichtsignals 10 aufgeteilt wird.

Der erste Strahlungsanteil 10a wird an dem Strahlteiler 12a transmittiert und an einem ersten Umlenkspiegel 24a zu einem ersten Wellenlängenfilter 13a umgelenkt, welcher den ersten Wellenlängenbereich Δλ₁ aus dem ersten Strahlungsanteil 10a selektiert. Der zweite Strahlungsanteil 10b wird an dem Strahlteiler 12a reflektiert und durchläuft einen zweiten Wellenlängenfilter 13b, welcher den zweiten Wellenlängenbereich Δλ₂ aus dem zweiten Strahlungsanteil 10b des Prozesslichtsignals 10 selektiert. Der zweite Strahlungsanteil 10b wird nach dem Durchlaufen des zweiten Wellenlängenfilters 13b an einem zweiten Umlenkspiegel 24b umgelenkt und trifft ebenso wie der erste Strahlungsanteil 10a auf einen (weiteren) dichroitischen Spiegel 12b, welcher ausgebildet ist, den ersten Wellenlängenbereich Δλ₁ zu transmittieren und den zweiten Wellenlängenbereich Δλ₂ zu reflektieren. Die beiden Strahlungsanteile 10a, 10b werden an dem dichroitischen Spiegel 12b überlagert und im Wesentlichen parallel zueinander ausgerichtet, so dass diese gemeinsam auf eine Fokussierlinse 14 auftreffen, an der die beiden Strahlungsanteile 10a, 10b auf eine Detektorfläche 25 des ortsauflösenden Detektors 15 fokussiert werden.

Wie in Fig. 1b zu erkennen ist, sind der erste und zweite Umlenkspiegel 24a, 24b nicht exakt parallel zueinander ausgerichtet, so dass der erste Strahlungsanteil 10a an einer anderen Stelle auf der Detektorfläche 25 auftrifft als der zweite Strahlungsanteil 10b. Die Intensität I₁ des ersten Strahlungsanteils 10a im ersten Wellenlängenbereich Δλ1 und die Intensität I₂ des zweiten Strahlungsanteils 10b im zweiten Wellenlängenbereich Δλ₂ des Prozesslichtsignals 10 können daher in einer Überwachungseinrichtung 20, die mit der Detektionseinrichtung 11 in Verbindung steht, voneinander unterschieden werden. Bei dem in Fig. 1b gezeigten Aufbau der Detektionseinrichtung 11 kann der ortsauflösende Detektor 15 bzw. die Kamera auch zur Prozessüberwachung eingesetzt werden. Zu diesem Zweck können ggf. die Wellenlängenfilter 13a, 13b entfernt sowie einer der beiden Strahlungsanteile 10a, 10b ausgeblendet werden. An Stelle des ortsauflösenden Detektors 15 können bei dem in Fig. 1b gezeigten Aufbau der Detektionseinrichtung 11 zwei Sensoren, beispielsweise zwei Fotodioden, verwendet werden, die voneinander beabstandet gemeinsam in einer Ebene angeordnet sind, die der Detektorfläche 25 von Fig. 1a entspricht, um einen jeweiligen Strahlungsanteil 10a, 10b zu detektieren.

Es versteht sich, dass Abweichungen von dem in Fig. 1a und Fig. 1b gezeigten Aufbau der Detektionseinrichtung 11 möglich sind. Beispielsweise kann bei dem in Fig. 1b gezeigten Aufbau an Stelle der polarisationsselektiven Strahlteilereinrichtung 12a eine wellenlängenselektive Strahlteilereinrichtung verwendet werden, welche den ersten Wellenlängenbereich Δλ₁ transmittiert und den zweiten Wellenlängenbereich Δλ₂ reflektiert, oder umgekehrt. In diesem Fall kann auf die Verwendung der beiden Wellenlängenfilter 13a, 13b verzichtet werden. Auch ist die Bandbreite der beiden Wellenlängenfilter 13a, 13b nicht auf die oben angegebenen Wertebereiche beschränkt. So kann beispielsweise der erste Wellenlängenbereich Δλ₁ eine Bandbreite zwischen 500 nm und 550 nm aufweisen bzw. abhängig davon festgelegt werden, welche Materialien typischer Weise von der Vorrichtung 1 geschnitten werden. Auch die Bandbreite bzw. der Wertebereich des zweiten Wellenlängenbereichs Δλ₂ können ggf. geeignet variiert werden, beispielsweise kann der zweite Wellenlängenbereich Δλ₂ auch zwischen 560 nm und 610 nm liegen bzw. in einem grundsätzlich beliebigen, möglichst schmalbandigen Intervall zwischen 560 nm und 800 nm, sofern dort keine Emissionslinien vorhanden sind.

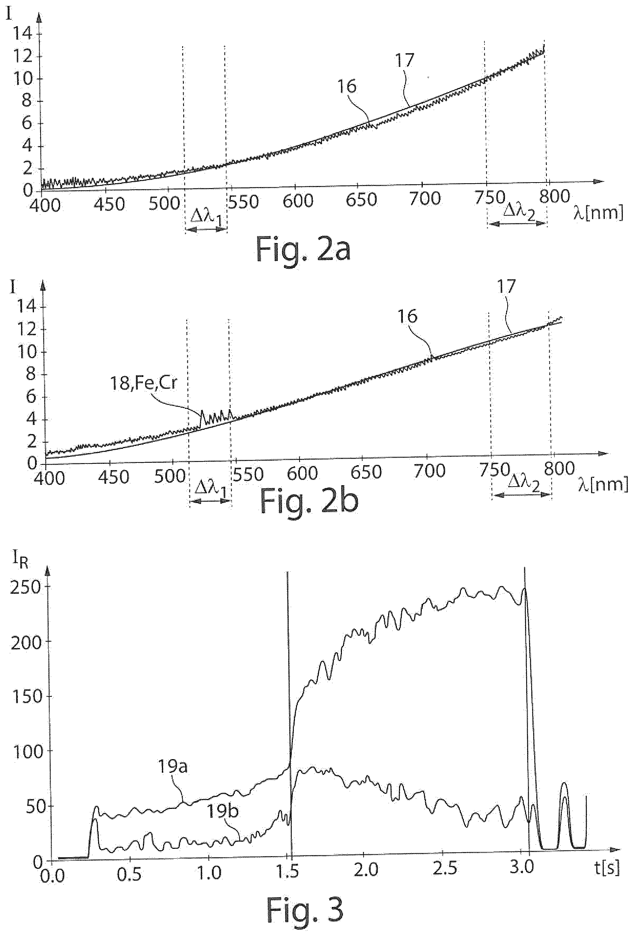

Fig. 2a,b zeigt die spektrale Intensität I des Prozesslichtsignals 10 in Abhängigkeit von der Wellenlänge A bei einem Qualitätsschnitt (Fig. 2a) und bei einem Schlechtschnitt (Fig. 2b) im sichtbaren Wellenlängenbereich zwischen 400 nm und 800 nm für ein Werkstück 2 in Form von Edelstahl mit einer Dicke d von 8 mm. Die Intensität I des Prozesslichtsignals 10 besteht bei dem in Fig. 2a gezeigten Gutschnitt nahezu vollständig aus Kontinuumsstrahlung in Form von Temperatur- bzw. Wärmestrahlung 16, die im Wesentlichen der Wellenlängenabhängigkeit von Wärmestrahlung 17 ähnlich wie bei einem schwarzen Strahler, genauer gesagt ähnlich wie bei einem grauen Strahler, mit einer Temperatur T von 2236 K folgt, die in Fig. 2a ebenfalls dargestellt ist.

Bei dem in Fig. 2b gezeigten Beispiel ist ebenfalls die Temperaturstrahlung 16 des Prozesslichtsignals 10 zu erkennen, der in dem ersten Wellenlängenbereich Δλ₁ zwischen 515 nm und 545 nm Emissionslinien 18 überlagert sind, die auf das lokale Verdampfen von metallischen Bestandteilen des Werkstücks 2 in Form von Fe und Cr zurückzuführen sind. In dem ersten Wellenlängenbereich Δλ₁ weicht das Prozesslichtsignal 10 somit signifikant von der Temperaturstrahlung 17 eines schwarzen bzw. grauen Strahlers bei einer Temperatur T von 2717 K ab, die in Fig. 2b ebenfalls dargestellt ist. Wie in Fig. 2b ebenfalls zu erkennen ist, treten in dem zweiten Wellenlängenbereich Δλ₂ keine Emissionslinien von metallischen Bestandteilen des Werkstücks 2 auf, so dass dort die Temperaturstrahlung 16 des Werkstücks 2 frei von Emissionslinien detektiert werden kann.

Die Überwachungseinrichtung 20, welche mit dem ersten und dem zweiten Sensor 15a, 15b in Verbindung steht, überwacht den Schneidprozess anhand der Intensität I₁ des in dem ersten Wellenlängenbereich Δλ₁ detektierten Prozesslichtsignals 10 sowie anhand der Intensität I₂ des in dem zweiten Wellenlängenbereich Δλ₂ detektierten Prozesslichtsignals 10. Wie anhand von Fig. 2a,b zu erkennen ist, wird die Intensität I₂, die von dem zweiten Sensor 15b der Detektionseinrichtung 11 von Fig. 1a detektiert wird, von der Verdampfung von metallischem Werkstückmaterial in dem Wechselwirkungsbereich 9 nicht bzw. nur geringfügig beeinflusst. Die Intensität I₂, die in dem zweiten Wellenlängenbereich Δλ₂ detektiert wird, kann daher als Referenzwert für die Intensität I₁ dienen, die in dem ersten Wellenlängenbereich Δλ₁ von dem ersten Sensor 15a detektiert wird.

Anhand einer Auswertung der beiden Intensitäten I₁, I₂, beispielsweise anhand der Bildung eines Quotienten I_{R} = I₁ / I₂ (relative Intensität) zwischen der Intensität I₁ in dem ersten Wellenlängenbereich Δλ₁ und der Intensität I₂ in dem zweiten Wellenlängenbereich Δλ₂, die in der Überwachungseinrichtung 20 vorgenommen wird, kann eine lokale Verdampfung von metallischen Bestandteilen, z.B. in Form von Fe oder Cr, des Werkstücks 2 festgestellt werden. Die Verdampfung der metallischen Bestandteile des Werkstücks 2 ist ein Indiz für Schneidfehler, die bei einem Schneidprozess auftreten, der nachfolgend näher beschrieben wird.

Wie in Fig. 1a zu erkennen ist, erfolgt bei dem Schneidprozess eine Relativbewegung zwischen dem Werkstück 2 und der Schneidgas-Düse 8 bzw. dem Laserschneidkopf 3 durch die Bewegung der Schneidgas-Düse 8 bzw. des Laserschneidkopfs 3 entlang der positiven X-Richtung. Alternativ oder zusätzlich kann das Werkstück 2 in entgegengesetzter Richtung (negative X-Richtung) relativ zur Düse 8 bzw. zum Laserschneidkopf 3 bewegt werden. In jedem Fall erfolgt eine Relativbewegung zwischen dem Werkstück 2 und dem Laserschneidkopf 3 mit einer als Vorschubgeschwindigkeit v bezeichneten Relativgeschwindigkeit. Bei dem Schneidprozess bildet sich im Vorlauf zum Wechselwirkungsbereich 9 eine Schneidfront 21 aus, an die sich im Nachlauf (in negativer X-Richtung) ein Schnittspalt 22 (im Folgenden auch gelegentlich als Schnittfuge bezeichnet) anschließt.

Bei einem Schneidprozess kann es beim Verdampfen von metallischen Bestandteilen des Werkstücks 2 zu Schneidfehlern, beispielsweise in Form einer verstärkten Kantenrauigkeit an den Schnittkanten des Schnittspalts 22 oder zu einer verstärkten Gratbildung kommen. Derartige Schneidfehler treten auf, wenn die Vorschubgeschwindigkeit v so groß wird, dass eine lokale Verdampfung von metallischen Bestandteilen des Werkstücks 2, beispielsweise von Fe und Cr, auftritt. Beispielsweise unterscheidet sich die in Fig. 2a dargestellte wellenlängenabhängige Intensität I bei einem Qualitätsschnitt (ohne lokale Verdampfung) von der in Fig. 2b dargestellten wellenlängenabhängigen Intensität I bei einem Schlechtschnitt (mit lokaler Verdampfung) lediglich dadurch, dass in Fig. 2a eine Vorschubgeschwindigkeit v von 1,1 m/min und in Fig. 2b eine Vorschubgeschwindigkeit v von 1,2 m/min gewählt wurde.

Der Einfluss der Vorschubgeschwindigkeit v auf die aus den beiden detektierten Intensitäten I₁, I₂ in der Überwachungseinrichtung 20 gebildeten relativen Intensität I_{R} ist in Fig. 3 in Abhängigkeit von der Zeit t dargestellt. Bei dem in Fig. 3 gezeigten Beispiel wird die Vorschubgeschwindigkeit v mit zunehmender Zeitdauer von einem Startzeitpunkt t₀ = 0 kontinuierlich (linear) erhöht. Wie in Fig. 3 anhand einer ersten Intensitätskurve 19a zu erkennen ist, welche den gleitenden Mittelwert der relativen Intensität I_{R} darstellt, kommt es bei zunehmender Vorschubgeschwindigkeit v ab einem Zeitpunkt von t = 1,5 Sekunden, der in Fig. 3 durch eine senkrechte Linie markiert ist, zu einem signifikanten Anstieg der relativen Intensität I_{R}, d.h. zu einem Intensitätssprung. Dieser Anstieg ist auf das Einsetzen der lokalen Verdampfung des metallischen Werkstücks 2 zurückzuführen. In dem in Fig. 3 links von dem Anstieg befindlichen Bereich, d.h. bei kleineren Vorschubgeschwindigkeiten v, liegt ein Qualitätsschnitt vor, in dem rechts von der senkrechten Linie befindlichen Bereich liegt ein Schlechtschnitt vor. Auch die zweite in Fig. 3 gezeigte Intensitätskurve 19b, welche die gleitende Standardabweichung der relativen Intensität I_{R} darstellt, erfährt eine höhere Dynamik und steigt daher an. In Fig. 3 kommt es bei einer weiteren Zunahme der Vorschubgeschwindigkeit v zu einer signifikanten Abnahme der detektierten relativen Intensität I_{R}. Die Abnahme der detektierten relativen Intensität I_{R} ist jedoch auf eine Übersteuerung des Sensors zurückzuführen, die durch eine starke Zunahme der relativen Intensität I_{R} aufgrund eines Schnittabrisses verursacht wird, bei dem das Werkstück 2 nicht mehr vollständig von dem Laserstrahl 5 durchgetrennt wird.

Um Schneidfehlern vorzubeugen bzw. um einen Schlechtschnitt zu vermeiden, der von der Überwachungseinrichtung 20 festgestellt werden kann, ist in der Vorrichtung 1 von Fig. 1a eine Steuerungseinrichtung 23 angeordnet, die mit der Überwachungseinrichtung 20 in Verbindung steht und die ausgebildet bzw. programmiert ist, anhand der Intensität I₁ des in dem ersten Wellenlängenbereich Δλ₁ detektierten Prozesslichtsignals 10 sowie anhand der Intensität I₂ des in dem zweiten Wellenlängenbereich Δλ₂ detektierten Prozesslichtsignals 10 mindestens einen Kontrollparameter des Laser-Schneidprozesses anzupassen.

Die Anpassung des mindestens einen Kontrollparameters durch die Steuerungseinrichtung 23 kann beispielsweise erfolgen, wenn die relative Intensität I_{R} über einem Schwellwert liegt, in der Regel ist es jedoch günstiger, die Anpassung vorzunehmen, wenn die (positive) Steigung bzw. die Zeitableitung der relativen Intensität I_{R} einen Schwellwert überschreitet, da ein schneller Anstieg der relativen Intensität I_{R} ein Hinweis auf einen Übergang zwischen einem Qualitätsschnitt und einem Schlechtschnitt darstellt, wie in Fig. 3 zu erkennen ist.

Um den mindestens einen Kontrollparameter anzupassen, wirkt die Steuerungseinrichtung 23 auf eine oder mehrere Einrichtungen der Vorrichtung 1 ein, welche den Schneidprozess beeinflussen. Insbesondere kann die Steuerungseinrichtung 23 auf einen (nicht bildlich dargestellten) Antrieb der Vorrichtung 1 einwirken, welcher den Laserschneidkopf 3 über das Werkstück 2 bewegt. Die Steuerungseinrichtung 23 kann hierbei die Vorschubgeschwindigkeit v der Relativbewegung zwischen dem Laserschneidkopf 3 und dem Werkstück 2 reduzieren und auf diese Weise der Verdampfung der metallischen Bestandteile Fe, Cr des Werkstücks 2 entgegen wirken.

Alternativ oder zusätzlich kann die Steuerungseinrichtung 23 auch andere Kontrollparameter anpassen, beispielsweise kann die Steuerungseinrichtung 23 auf die Laserquelle 6 einwirken, um die Leistung P des Laserstrahls 5 zu erhöhen oder ggf. auf einen Stellantrieb der Fokussierlinse 4b, um diese entlang der Strahlachse 5a des Laserstrahls 5 zu verschieben und auf diese Weise die Fokusposition F des Laserstrahls 5 entlang der Strahlachse 5a zu verändern, wodurch der Strahldurchmesser des Laserstrahls 5 auf dem Werkstück 2 angepasst werden kann. Durch die Vergrößerung des Durchmessers des Laserstrahls 5 auf dem Werkstück 2 kann typischer Weise ebenfalls einer Verdampfung von metallischen Bestandteilen Fe, Cr des Werkstücks 2 entgegen gewirkt werden. Alternativ oder zusätzlich kann auch der Fokusdurchmesser d des Laserstrahls 5 eingestellt werden, beispielsweise indem eine Strahlformung an der Lichtaustrittsfläche der Lichtleitfaser 7 vorgenommen wird, welche das Strahlprofil des Laserstrahls 5 und somit den Fokusdurchmesser d geeignet anpasst.

Zusätzlich oder alternativ kann die Steuerungseinrichtung 23 auch ausgebildet bzw. programmiert sein, auf einen Stellantrieb des Laserschneidkopfs 3 einzuwirken, um einen Abstand A zwischen der Schneidgas-Düse 8 und dem Werkstück 2 einzustellen, um auf diese Weise die Strömung eines beim Schmelzschneiden verwendeten inerten Schneidgases, beispielsweise in Form von Argon oder Stickstoff, so zu beeinflussen, dass der Verdampfung der metallischen Bestandteile Fe, Cr des Werkstücks 2 entgegen gewirkt wird. Auch der Schneidgasdruck p, mit dem das Schneidgas dem Schmelzschneidprozess von der Vorrichtung 1 zur Verfügung gestellt wird bzw. mit der das Schneidgas aus der Schneidgas-Düse 8 austritt, kann mit Hilfe der Steuerungseinrichtung 23 angepasst werden, um dem Verdampfen entgegen zu wirken. Der (statische) Schneidgasdruck p liegt beim Schmelzschneiden in der Regel zwischen ca. 2 bar und ca. 20 bar und kann z.B. über ein Ventil eingestellt werden.

Die Steuerungseinrichtung 23 kann insbesondere auch ausgelegt bzw. programmiert sein, den Schneidprozess zu regeln. Die Regelung erfolgt idealer Weise derart, dass der Schneidprozess stets an der in Fig. 3 gezeigten Grenze am Übergang zwischen einem Qualitätsschnitt und einem Schlechtschnitt bleibt, und zwar idealer Weise knapp unterhalb dieser Grenze. Die Steuerungseinrichtung kann zu diesem Zweck beispielsweise die Vorschubgeschwindigkeit v und/oder andere Kontrollparameter so einstellen, dass die in Fig. 3 gezeigte relative Intensität I_{R} stets knapp unterhalb dieser Grenze eingestellt bzw. geregelt wird, so dass eine Prozessregelung des Schneidprozesses an der Qualitätsgrenze erfolgt. Im Gegensatz zu einer solchen Regelung beim Beginn des Auftretens eines Schlechtschnitts wird im Stand der Technik in der Regel nur das Auftreten eines Schnittabrisses erkannt bzw. detektiert, d.h. es wird erst in den Schneidprozess steuernd oder regelnd eingegriffen, wenn bereits ein Schlechtschnitt vorliegt. Bei dem oben beschriebenen Schneidprozess, in den steuernd oder regelnd eingegriffen wird, handelt es sich um einen Schmelzschneidprozess. Die Vorrichtung kann aber auch zur Durchführung eines Brennschneidprozesses unter Verwendung eines reaktiven Schneidgases, z.B. in Form von Sauerstoff, dienen. Auch in einen Brennschneidprozess kann bei einsetzender Verdampfung des Werkstückmaterials steuernd oder regelnd eingegriffen werden, da auch bei einem Brennschneidprozess die einsetzende Verdampfung des Werkstückmaterials ein Hinweis auf einen Schlechtschnitt darstellt.

## Patentansprüche

1. Verfahren zum Überwachen, insbesondere zum Regeln, eines Schneidprozesses, bei dem ein Werkstück (2) mittels eines Hochenergiestrahls, insbesondere mittels eines Laserstrahls (5), geschnitten wird, das Verfahren umfassend:
Detektieren eines von einem Wechselwirkungsbereich (9) des Hochenergiestrahls mit dem Werkstück (2) ausgehenden Prozesslichtsignals (10) in einem ersten Wellenlängenbereich (Δλ₁), in dem mindestens ein metallischer Bestandteil des Werkstücks (2) mindestens eine Emissionslinie (18) aufweist, sowie in einem zweiten, vom ersten verschiedenen Wellenlängenbereich (Δλ₂), in dem Kontinuumsstrahlung, insbesondere Temperaturstrahlung (16), des Werkstücks (2) ohne Emissionslinien detektierbar ist, und
Überwachen des Schneidprozesses, insbesondere Überwachen einer Verdampfung des mindestens einen metallischen Bestandteils, anhand einer Intensität (I₁) des in dem ersten Wellenlängenbereich (Δλ₁) detektierten Prozesslichtsignals (10) und anhand einer Intensität (I₂) des in dem zweiten Wellenlängenbereich (Δλ₂) detektierten Prozesslichtsignals (10).

2. Verfahren nach Anspruch 1, weiter umfassend: Anpassen mindestens eines Kontrollparameters des Schneidprozesses in Abhängigkeit von der Intensität (I₁) des in dem ersten Wellenlängenbereich (Δλ₁) und der Intensität (I₂) des in dem zweiten Wellenlängenbereich (Δλ₂) detektierten Prozesslichtsignals (10).

3. Verfahren nach Anspruch 2, bei dem der mindestens eine Kontrollparameter derart angepasst wird, dass dem Verdampfen des mindestens einen metallischen Bestandteils entgegen gewirkt wird.

4. Verfahren nach einem der Ansprüche 2 oder 3, bei dem der mindestens eine Kontrollparameter ausgewählt ist aus der Gruppe umfassend:
Vorschubgeschwindigkeit (v), Leistung (P) des Hochenergiestrahls, Fokusposition (F) des Hochenergiestrahls entlang seiner Strahlachse (5a), Fokusdurchmesser (d), Abstand (A) zwischen Werkstückoberseite (2a) und einer Schneidgas-Düse (8) eines Schneidkopfs (3), und Schneidgasdruck (p).

5. Verfahren nach einem der vorhergehenden Ansprüche, bei dem der erste Wellenlängenbereich (Δλ₁) und der zweite Wellenlängenbereich (Δλ₂) jeweils im sichtbaren Wellenlängenbereich zwischen 400 nm und 800 nm liegen.

6. Verfahren nach einem der vorhergehenden Ansprüche, bei dem der erste Wellenlängenbereich (Δλ₁) zwischen 500 nm und 550 nm, bevorzugt zwischen 515 nm und 545 nm, liegt.

7. Verfahren nach einem der vorhergehenden Ansprüche, bei dem der zweite Wellenlängenbereich (Δλ₂) bei Wellenlängen von mehr als 560 nm liegt.

8. Verfahren nach einem der vorhergehenden Ansprüche, bei dem der Laserstrahl (5) eine Laserwellenlänge (λ_{L}) im IR-Wellenlängenbereich zwischen 800 nm und 1200 nm aufweist.

9. Vorrichtung (1) zur Überwachung, insbesondere zur Regelung, eines Schneidprozesses an einem Werkstück (2), umfassend:
eine Fokussiereinrichtung (4b) zur Fokussierung eines Hochenergiestrahls, insbesondere eines Laserstrahls (5), auf das Werkstück (2),
eine Detektionseinrichtung (11) zur Detektion eines Prozesslichtsignals (10) aus einem Wechselwirkungsbereich (9) des Hochenergiestrahls mit dem Werkstück (2) in einem ersten Wellenlängenbereich (Δλ₁), in dem mindestens ein metallischer Bestandteil des Werkstücks (2) mindestens eine Emissionslinie (18) aufweist, sowie in einem zweiten, vom ersten verschiedenen Wellenlängenbereich (Δλ₂), in dem Kontinuumsstrahlung, insbesondere Temperaturstrahlung (16), des Werkstücks (2) ohne Emissionslinien detektierbar ist, sowie
eine Überwachungseinrichtung (20), die zum Überwachen des Schneidprozesses, insbesondere zum Überwachen einer Verdampfung des mindestens einen metallischen Bestandteils, anhand einer Intensität (I₁) des in dem ersten Wellenlängenbereich (Δλ₁) detektierten Prozesslichtsignals (10) und anhand einer Intensität (I₂) des in dem zweiten Wellenlängenbereich (Δλ₂) detektierten Prozesslichtsignals (10) ausgebildet ist.

10. Vorrichtung nach Anspruch 9, weiter umfassend:
eine Steuerungseinrichtung (23), die ausgebildet ist, anhand des in dem ersten Wellenlängenbereich (Δλ₁) und in dem zweiten Wellenlängenbereich (Δλ₂) detektierten Prozesslichtsignals (10) mindestens einen Kontrollparameter des Schneidprozesses anzupassen.

11. Vorrichtung nach Anspruch 10, bei welcher die Steuerungseinrichtung (23) ausgebildet ist, den mindestens eine Kontrollparameter derart anzupassen, dass dem Verdampfen des mindestens einen metallischen Bestandteils entgegen gewirkt wird.

12. Vorrichtung nach einem der Ansprüche 9 bis 11, bei welcher die Detektionseinrichtung (11) zur Selektion des ersten Wellenlängenbereichs (Δλ₁) des Prozesslichtsignals (10) bei Wellenlängen zwischen 500 nm und 550 nm, bevorzugt zwischen 515 nm und 545 nm, und zur Selektion des zweiten Wellenlängenbereichs (Δλ₂) des Prozesslichtsignals (10) bei Wellenlängen von mehr als 560 nm ausgebildet ist.

13. Vorrichtung nach einem der Ansprüche 9 bis 12, bei welcher die Detektionseinrichtung (11) einen ersten Wellenlängenfilter (13a) zur Selektion des ersten Wellenlängenbereichs (Δλ₁) des Prozesslichtsignals (10) sowie einen zweiten Wellenlängenfilter (13b) zur Selektion des zweiten Wellenlängenbereichs (Δλ₂) des Prozesslichtsignals (10) aufweist.

14. Vorrichtung nach einem der Ansprüche 9 bis 13, bei der die Detektionseinrichtung (11) einen ersten Sensor (15a) zur Detektion des ersten Wellenlängenbereichs (Δλ₁) des Prozesslichtsignals (10) sowie einen zweiten Sensor (15b) zur Detektion des zweiten Wellenlängenbereichs (Δλ₂) des Prozesslichtsignals (10) aufweist.

15. Vorrichtung nach einem der Ansprüche 9 bis 13, bei der die Detektionseinrichtung (11) einen ortsauflösenden Detektor, insbesondere eine Kamera (15), mit einer Detektorfläche (25) zur gemeinsamen Detektion des ersten Wellenlängenbereichs (Δλ₁) und des zweiten Wellenlängenbereichs (Δλ₂) des Prozesslichtsignals (10) aufweist.

## Claims

1. A method for monitoring, in particular controlling, a cutting process, in which a workpiece (2) is cut by means of a high-energy beam, in particular by means of a laser beam (5), the method comprising:
detecting a process light signal (10), emanating from an interaction region (9) of the high-energy beam with the workpiece (2), in a first wavelength range (Δλ₁), in which at least one metallic constituent of the workpiece (2) has at least one emission line (18), and in a second wavelength range (Δλ₂), which differs from the first wavelength range, in which continuum radiation, in particular temperature radiation (16), of the workpiece (2) without emission lines is detectable, and
monitoring the cutting process, in particular monitoring a vaporization of the at least one metallic constituent, on the basis of an intensity (I₁) of the process light signal (10) detected in the first wavelength range (Δλ₁) and on the basis of an intensity (I₂) of the process light signal (10) detected in the second wavelength range (Δλ₂).

2. The method as claimed in claim 1, further comprising: adapting at least one control parameter of the cutting process depending on the intensity (I₁) of the process light signal (10) detected in the first wavelength range (Δλ₁) and the intensity (I₂) of the process light signal (10) detected in the second wavelength range (Δλ₂).

3. The method as claimed in claim 2, wherein the at least one control parameter is adapted in such a way that the vaporization of the at least one metallic constituent is counteracted.

4. The method as claimed in either of claims 2 and 3, wherein the at least one control parameter is selected from the group comprising:
advance speed (v), power (P) of the high-energy beam, focal position (F) of the high-energy beam along its beam axis (5a), focal diameter (d), distance (A) between the workpiece upper side (2a) and a cutting gas nozzle (8) of a cutting head (3), and cutting gas pressure (p).

5. The method as claimed in any one of the preceding claims, wherein the first wavelength range (Δλ₁) and the second wavelength range (Δλ₂) each lie in the visible wavelength range between 400 nm and 800 nm.

6. The method as claimed in any one of the preceding claims, wherein the first wavelength range (Δλ₁) lies between 500 nm and 550 nm, preferably between 515 nm and 545 nm.

7. The method as claimed in any one of the preceding claims, wherein the second wavelength range (Δλ₂) lies at wavelengths of more than 560 nm.

8. The method as claimed in any one of the preceding claims, wherein the laser beam (5) has a laser wavelength (λ_{L}) in the IR wavelength range between 800 nm and 1200 nm.

9. An apparatus (1) for monitoring, in particular controlling, a cutting process on a workpiece (2), comprising:
a focusing device (4b) for focusing a high-energy beam, in particular a laser beam (5), onto the workpiece (2),
a detection device (11) for detecting a process light signal (10) from an interaction region (9) of the high-energy beam with the workpiece (2) in a first wavelength range (Δλ₁), in which at least one metallic constituent of the workpiece (2) has at least one emission line (18), and in a second wavelength range (Δλ₂), which differs from the first wavelength range, in which continuum radiation, in particular temperature radiation (16), of the workpiece (2) without emission lines is detectable, and
a monitoring device (20), embodied to monitor the cutting process, in particular to monitor a vaporization of the at least one metallic constituent, on the basis of an intensity (I₁) of the process light signal (10) detected in the first wavelength range (Δλ₁) and on the basis of an intensity (I₂) of the process light signal (10) detected in the second wavelength range (Δλ₂).

10. The apparatus as claimed in claim 9, further comprising:
a control device (23), embodied to adapt at least one control parameter of the cutting process on the basis of the process light signal (10) detected in the first wavelength range (Δλ₁) and in the second wavelength range (Δλ₂).

11. The apparatus as claimed in claim 10, wherein the control device (23) is embodied to adapt the at least one control parameter in such a way that the vaporization of the at least one metallic constituent is counteracted.

12. The apparatus as claimed in any one of claims 9 to 11, wherein the detection device (11) is embodied to select the first wavelength range (Δλ₁) of the process light signal (10) at wavelengths between 500 nm and 550 nm, preferably between 515 nm and 545 nm, and to select the second wavelength range (Δλ₂) of the process light signal (10) at wavelengths of more than 560 nm.

13. The apparatus as claimed in any one of claims 9 to 12, wherein the detection device (11) has a first wavelength filter (13a) for selecting the first wavelength range (Δλ₁) of the process light signal (10) and a second wavelength filter (13b) for selecting the second wavelength range (Δλ₂) of the process light signal (10).

14. The apparatus as claimed in any one of claims 9 to 13, wherein the detection device (11) has a first sensor (15a) for detecting the first wavelength range (Δλ₁) of the process light signal (10) and a second sensor (15b) for detecting the second wavelength range (Δλ₂) of the process light signal (10).

15. The apparatus as claimed in any one of claims 9 to 13, wherein the detection device (11) has a spatially resolving detector, in particular a camera (15), with a detector surface (25) for common detection of the first wavelength range (Δλ₁) and of the second wavelength range (Δλ₂) of the process light signal (10).

## Revendications

1. Procédé de surveillance, en particulier de régulation, d'un processus de coupe lors duquel une pièce (2) est coupée au moyen d'un faisceau à haute énergie, en particulier au moyen d'un faisceau laser (5), comprenant les étapes suivantes :
détection d'un signal lumineux de processus (10) provenant d'une zone d'interaction (9) du faisceau à haute énergie avec la pièce (2) dans une première plage de longueurs d'onde (Δλ₁), au moins un constituant métallique de la pièce (2) présentant au moins une raie d'émission (18), et dans une deuxième plage de longueurs d'onde (Δλ₂), différente de la première plage de longueurs d'onde (Δλ₁), dans laquelle un rayonnement continu, en particulier un rayonnement de température (16), sans raies d'émission, de la pièce (2) est détectable, et
surveillance du processus de coupe, en particulier surveillance d'une évaporation dudit au moins un constituant métallique, à l'aide d'une intensité (I₁) du signal lumineux de processus (10) détecté dans la première plage de longueurs d'onde (Δλ₁) et à l'aide d'une intensité (I₂) du signal lumineux de processus (10) détecté dans la deuxième plage de longueurs d'onde (Δλ₂).

2. Procédé selon la revendication 1, comprenant en outre l'étape suivante : adaptation d'au moins un paramètre de contrôle du processus de coupe en fonction de l'intensité (I₁) du signal lumineux de processus (10) détecté dans la première plage de longueurs d'onde (Δλ₁) et de l'intensité (I₂) du signal lumineux de processus (10) détecté dans la deuxième plage de longueurs d'onde (Δλ₂).

3. Procédé selon la revendication 2, dans lequel ledit au moins un paramètre de contrôle est adapté de telle sorte que l'évaporation dudit au moins un constituant métallique soit contrecarrée.

4. Procédé selon l'une des revendications 2 ou 3, dans lequel ledit au moins un paramètre de contrôle est choisi dans le groupe constitué par :
vitesse d'avance (v), puissance (P) du faisceau à haute énergie, position de focalisation (F) du faisceau à haute énergie le long de son axe de faisceau (5a), diamètre de focalisation (d), distance (A) entre la face supérieure de pièce (2a) et une buse de gaz de coupe (8) d'une tête de coupe (3) et pression (p) du gaz de coupe.

5. Procédé selon l'une des revendications précédentes, dans lequel la première plage de longueurs d'onde (Δλ₁) et la deuxième plage de longueurs d'onde (Δλ₁) se situent chacune dans la plage de longueurs d'onde visibles comprise entre 400 nm et 800 nm.

6. Procédé selon l'une des revendications précédentes, dans lequel la première plage de longueurs d'onde (Δλ₁) se situe entre 500 nm et 550 nm, de préférence entre 515 nm et 545 nm.

7. Procédé selon l'une des revendications précédentes, dans lequel la deuxième plage de longueurs d'onde (Δλ₂) se situe à des longueurs d'onde supérieures à 560 nm.

8. Procédé selon l'une des revendications précédentes, dans lequel le faisceau laser (5) présente une longueur d'onde laser (λ_{L}) dans la plage de longueurs d'onde IR comprise entre 800 nm et 1200 nm.

9. Dispositif (1) de surveillance, en particulier de régulation, d'un processus de coupe sur une pièce (2), comprenant :
un moyen de focalisation (4b) pour focaliser un faisceau à haute énergie, en particulier un faisceau laser (5), sur la pièce (2),
un moyen de détection (11) pour détecter un signal lumineux de processus (10) provenant d'une zone d'interaction (9) du faisceau à haute énergie avec la pièce (2) dans une première plage de longueurs d'onde (Δλ₁), au moins un constituant métallique de la pièce (2) présentant au moins une raie d'émission (18), et dans une deuxième plage de longueurs d'onde (Δλ₂), différente de la première plage de longueurs d'onde (Δλ₁), dans laquelle un rayonnement continu, en particulier un rayonnement de température (16), sans raies d'émission, de la pièce (2) est détectable, et
un moyen de surveillance (20) qui est conçu pour surveiller le processus de coupe, en particulier pour surveiller une évaporation dudit au moins un constituant métallique, à l'aide d'une intensité (I₁) du signal lumineux de processus (10) détecté dans la première plage de longueurs d'onde (Δλ₁) et à l'aide d'une intensité (I₂) du signal lumineux de processus (10) détecté dans la deuxième plage de longueurs d'onde (Δλ₂).

10. Dispositif selon la revendication 9, comprenant en outre :
un moyen de commande (23) qui est conçu pour adapter au moins un paramètre de contrôle du processus de coupe à l'aide du signal lumineux de processus (10) détecté dans la première plage de longueurs d'onde (Δλ₁) et dans la deuxième plage de longueurs d'onde (Δλ₂).

11. Dispositif selon la revendication 10, dans lequel le moyen de commande (23) est conçu pour adapter ledit au moins un paramètre de contrôle de telle sorte que l'évaporation dudit au moins un constituant métallique soit contrecarrée.

12. Dispositif selon l'une des revendications 9 à 11, dans lequel le moyen de détection (11) est conçu pour sélectionner la première plage de longueurs d'onde (Δλ₁) du signal lumineux de processus (10) à des longueurs d'onde comprises entre 500 nm et 550 nm, de préférence entre 515 nm et 545 nm, et pour sélectionner la deuxième plage de longueurs d'onde (Δλ₂) du signal lumineux de processus (10) à des longueurs d'onde supérieures à 560 nm.

13. Dispositif selon l'une des revendications 9 à 12, dans lequel le moyen de détection (11) présente un premier filtre de longueurs d'onde (13a) pour sélectionner la première plage de longueurs d'onde (Δλ₁) du signal lumineux de processus (10) et un deuxième filtre de longueurs d'onde (13b) pour sélectionner la deuxième plage de longueurs d'onde (Δλ₂) du signal lumineux de processus (10).

14. Dispositif selon l'une des revendications 9 à 13, dans lequel le moyen de détection (11) présente un premier capteur (15a) pour détecter la première plage de longueurs d'onde (Δλ₁) du signal lumineux de processus (10) et un deuxième capteur (15b) pour détecter la deuxième plage de longueurs d'onde (Δλ₂) du signal lumineux de processus (10).

15. Dispositif selon l'une des revendications 9 à 13, dans lequel le moyen de détection (11) présente un détecteur à résolution spatiale, en particulier une caméra (15), avec une surface de détection (25) pour la détection commune de la première plage de longueurs d'onde (Δλ₁) et de la deuxième plage de longueurs d'onde (Δλ₂) du signal lumineux de processus (10).
